# EUROPÄISCHE PATENTSCHRIFT

(11) **EP 1 935 710 B1**
(45) Veröffentlichungstag und Bekanntmachung des Hinweises auf die Patenterteilung: **06.08.2014**
(21) Anmeldenummer: 07118286.9
(22) Anmeldetag: 11.10.2007
(51) Int. Cl.: B60N 2/427, B60N 2/42

(54) **Crash-optimierter Kraftfahrzeugsitz**
Crash-optimised motor vehicle seat
Siège de véhicule automobile, optimisé anti-crash

(30) Priorität: 18.12.2006 DE 202006019154 U; 01.08.2007 DE 102007036466
(43) Veröffentlichungstag der Anmeldung: 25.06.2008
(73) Patentinhaber: Brose Fahrzeugteile GmbH & Co. Kommanditgesellschaft, Coburg, 96450 Coburg (DE)
(72) Erfinder: Schrimpl, Bernhard, 96450 Coburg (DE); Macht, Alwin, 96250 Ebensfeld (DE); Buchholz, Jens, 96489 Niederfüllbach (DE)
(74) Vertreter: 2K Patentanwälte Blasberg Kewitz & Reichel

(56) Entgegenhaltungen:
- EP-A1- 0 417 532
- EP-A1- 1 095 815
- DE-A1- 10 066 052
- DE-A1- 19 757 533
- DE-U1-202004 014 363
- FR-A1- 2 849 812
- GB-A- 2 377 370
- US-A1- 2005 093 352

## Beschreibung

Die Erfindung betrifft einen für den Fall eines Fahrzeugzusammenstoßes bzw. Crash-Fall optimierten Kraftfahrzeugsitz mit einer Rückenlehne nach dem Oberbegriff des Anspruchs 1.

Ein herkömmlicher Kraftfahrzeugsitz weist eine Rückenlehne auf, die auf ihrer Vorderseite eine Abstützfläche zum Abstützen des Rückens eines auf dem Kraftfahrzeugsitz sitzenden Insassen aufweist, und die mit einer Kopfstütze ausgestattet ist, die auf ihrer Vorderseite eine Abstützfläche zum Abstützen des Kopfes des Insassen aufweist, wobei die Rückenlehne einen Lehnenrahmen, ein Lehnenbasisteil und ein hierzu verkippbares Lehnenoberteil umfasst. Solch ein Kraftfahrzeugsitz ist z.B. aus der DE 20 2004 014 363 U1 bekannt. Der dortige Kraftfahrzeugsitz weist eine Rückenlehne auf, die in einem Crash-Fall weg vom Rücken des Insassen verkippbar bzw. verschwenkbar ist. Die Kopfstütze ist über eine Kopfstützenaufnahme in der Rückenlehne befestigt. Aus der dort beschriebenen Lösung ist bekannt, dass das Lehnenbasisteil und das Lehnenoberteil durch einen Arretierungsmechanismus in einer definierten Position zueinander gehalten werden kann, in welcher die beiden eine vorgebbare Abstützfläche für den Rücken des Fahrzeuginsassen bilden. In einem Crash-Fall wird der Arretierungsmechanismus durch die Crash-Kräfte gelöst oder überwunden, sodass das Lehnenoberteil bezüglich des Basisteiles nach hinten in einer Richtung weg vom Rücken des Insassen verkippt werden kann.

Die Kopfstütze dient dabei vor allem dazu, den Kopf des Insassen bei einem Zusammenstoß mit einem von hinten auffahrenden Fahrzeug (Heck-Crash) zu schützen.

Da der Kopf des Sitzbenutzers bzw. Insassen in der Regel nicht an der Kopfstütze anliegt, wird er bei einem Heck-Crash relativ zum Fahrzeug nach hinten geschleudert. Der Oberkörper des Insassen taucht hierbei üblicherweise in die Rückenlehne ein, bevor der Kopf von der Kopfstütze abgebremst werden kann. Bei den üblichen Fahrzeugsitzen, bei denen die Rückenlehne relativ steif ist, führt dies dazu, dass der Oberkörper wesentlich früher, schneller und härter abgebremst wird, als der Kopf des Insassen und dass damit eine Relativbewegung zwischen Kopf und Brustwirbel auftritt. Durch diese Relativbewegung entsteht jedoch wiederum ein sehr hoher Druck im Nervenkanal, der zu dem so genannten Schleudertrauma führt. Die gleichen Folgen haben eine zu niedrig eingestellte Kopfstütze oder ein Fahrzeugsitz ohne korrekt abgestimmte Steifigkeit. Der starke Druckanstieg im Nervenkanal entsteht durch eine Kombination von Zug- und Scherbewegung (sogenannter S-Schlag) innerhalb von 100 ms nach dem Aufprall.

Zur Vermeidung solcher Folgen ist aus DE 20 2004 014 363 U1 bekannt, das Lehnenoberteil, welches zum Abstützen des oberen Brustwirbelbereiches oder des Schulterbereiches dient, nach hinten zu verkippen, wodurch insbesondere verhindert wird, dass durch ein zeitlich unterschiedliches Auftreffen des Kopfes auf die zugeordnete Abstützfläche der Kopfstütze einerseits und des Oberkörpers auf die zugeordnete Abstützfläche des Lehnenoberteils andererseits eine Relativbewegung oder Relativbeschleunigung auftritt, welche zu dem oben erwähnten Schleudertrauma führen kann. Das Verkippen des Lehnenoberteils nach hinten in einem Crash-Fall kann demnach durch die Minimierung der Relativbewegung bzw. Relativbeschleunigung zwischen Kopfwirbel und Brustwirbel das Auftreten eines Schleudertraumas beim Heckaufprall vermeiden.

Aus der DE 20 2004 014 363 U1 ist ferner bekannt, die Kopfstütze des Kraftfahrzeugsitzes derart an der Rückenlehne anzuordnen und/oder in einem Crash-Fall derart relativ zu dem Lehnenoberteil zu verlagern, dass die Abstützfläche der Kopfstütze beim Verkippen des Lehnenoberteils nach hinten nicht gemeinsam mit diesem nach hinten verlagert wird. Gemäß dieser bekannten Lösung werden dann Beschleunigungsunterschiede zwischen oberem Halswirbelbereich und Brustwirbelbereich dadurch verringert, dass im Falle eines Aufpralls, welcher ein Verkippen des dem Brustwirbelbereich abstützenden Lehnenoberteils nach hinten bewirkt, der Kopf möglichst frühzeitig mit der zugeordneten Auch wenn diese Konstruktion das Problem des genannten S-Schlag mindern können, sind sie dennoch recht aufwendig gestaltet und nehmen einen großen Bauraum ein.

Ein gattungsgemäßer Kraftfahrzeugsitz ist aus dem Dokument US-A-2005/0093352 bekannt.

Die Erfindung stellt sich die Aufgabe, einen Kraftfahrzeugsitz der eingangs genannten Art im Hinblick auf sein Verhalten bei einem Crash-Falt, insbesondere bei einem Heck-Crash, weiter zu verbessern. Dazu soll eine Konstruktion mit möglichst geringem Bauraum vorgeschlagen werden.

Erfindungsgemäß wird die Aufgabe dadurch gelöst, dass das Energie-absorbierende Element in eine motor- und spindelgetriebene Verstellvorrichtung, integriert ist, die zur Verstellung der Rückenlehne und/oder der Kopfstütze vorgesehen ist. Bei der Erfindung wird das Energie-absorbierende Element vorzugsweise nachgiebig und reversibel ausgeführt. Dies kann etwa dadurch geschehen, dass das Energie-absorbierende Element in eine solche Verstellvorrichtung, insbesondere in eine motorgetriebene Verstellvorrichtung integriert ist, die als eine spindelgetriebene Verstellvorrichtung ausgestaltet ist. Dabei ist das Energie-absorbierende Element vorteilhafterweise als eine auf einer Antriebsspindel laufende Spindelmutter ausgestaltet, welche im Crash-Fall durchrutscht.

Durch diese Maßnahmen wird eine sehr kompakt realiserbare Konstruktion geschaffen, mit der der Oberkörper des Insassen im Crash-Fall hinsichtlich der unterschiedlichen Beschleunigungen im Kopfwirbelbercich bzw. Brustwirbelbereich kompensierend abgefangen werden kann. Dadurch reduziert sich die Peitschgeschwindigkeit (S-Schlag), mit welcher der Kopf gegen die Kopfstütze beschleunigt wird, sehr deutlich. Und die Beschleunigung des Brustwirbelbereichs des Insassen wird gegenüber dem Kopf deutlich minimiert. Somit wird eine, im Vergleich zum Stand der Technik, wesentlich verbesserte Crash-Performance bei einem gleichzeitig einfachen konstruktiven Aufbau erreicht, Der Kraftfahrzeugsitz muss keine einteilige Lehnenstruktur aufweisen, sondern kann auch zweiteilig z.B. als Knicklehne aufgebaut sein. Vorzugsweise wird die Erfindung in Modulbauweise realisiert, so dass sich die Ereindung auch in einem bereits zusammengebauten Lehnenmodul nachrüsten lassen kann.

Vorteilhafte Weiterbildungen der Erfindung ergeben sich aus den Unteransprüchen, der Beschreibung und den Zeichnungen.

Demnach ist es von Vorteil, wenn das Lehnenoberteil eine, bezogen auf ihrer unterseitige Lagerung bewegliche Stützmatte aufweist, und wenn das mindestens eine Energie-absorbierende Element wenigsten ein Deformationselement ist, welches im oberen Bereich der Stützmatte auf der dem Insassen zugewandten Seite angeordnet ist.

Von Vorteil ist es auch, wenn das Lehnenoberteil zum Lehnenbasisteil verkippbar ist, wobei die Rückenlehne im Crash-Fall weg vom Rücken des Insassen verkippbar ist, und wenn wenigstens eine Verstellvorrichtung zur Verstellung des oberen Bereichs der Stützmatte gegenüber dem Lehnenrahmen vorgesehen ist, wobei das mindestens eine Energie-absorbierende Element in Reihe mit jeweils einer Verstelleinrichtung, insbesondere einem Lehnenkopfversteller, angeordnet ist. Wenn nun das Lehnenoberteil im Crash-Fall nach hinten schwenkt, wird die Relativbewegung zwischen Halswirbel und Brustwirbel minimiert und wird das Auftreten des Schleudertraumas beim Heck-Crash verhindert. Der Oberkörper wird erst aufgefangen, wenn die Halswirbelsäule mit der Rückenwirbelsäule fluchtet. Diese verhindert den S-Schlag, welcher in erster Linie für das Halswirbelsäulen-Syndrom verantwortlich ist.

Vorzugsweise wird die wenigstens eine Verstellvorrichtung gegenüber einem, dem Insassen zugewandten waagerechten Steg des Lehnenrahmens abgestützt. Dabei ist das Energie-absorbierende Element vorzugsweise in Reihe mit einer Kopfstützenaufnahme angeordnet.

Ebenfalls von Vorteil ist es, wenn das mindestens eine Energie-absorbierende Element zwischen der Kopfstützenaufnahme und der Stützmatte angeordnet ist.

Vorzugsweise ist die Stützmatte in Folge einer drehbaren Lagerung in dem Lehnenbasisteil und/oder aufgrund ihrer Deformierbarkeit gegenüber dem Lehnenbasisteil verdrehbar.

Weiterhin ist es von Vorteil, wenn die Rückenlehne als ein Lehnenmodul ausgestaltet ist, insbesondere als ein zweiteiliges Lehnenmodul ausgestattet ist, welches einen unteren Abschnitt und einen oberen dazu verschwenkbaren Abschnitt aufweist.

Durch diese besonderen Merkmale lässt sich auf sehr effektive Art und Weise ein Kraftfahrzeugsitz mit optimierter Crash-Auffang- bzw. Kompensationsfunktion realisieren.

Weiterhin kann das Energie-absorbierende Element auch als ein elastisch verformbares Element ausgestaltet sein, welches in axialer Richtung zwischen einer Spindelmutter und einer, insbesondere muffenförmigen, Spindelmutteraufnahme angeordnet ist.

In diesem Zusammenhang ist das Energie-absorbierende Element bevorzugt als eine muffenförmige Spindelmutteraufnahme ausgestaltet, welche die Spindelmutter reibschlüssig umfasst. Diese Maßnahmen beziehen sich insbesondere auf eine spindelgetriebene Verstellvorrichtung, die auch die Funktion des Energie-absorbierende Element ausführt und vorzugsweise reversibles System gestaltet ist.

Das Energie-absorbierende Element kann auch nachgiebig und irreversibel ausgeführt sein, wobei das Energie-absorbierende Element vorzugsweise in eine solche Verstellvorrichtung integriert ist, die ebenfalls eine spindelgetriebene Verstellvorrichtung darstellt. In diesem Zusammenhang ist dann das Energie-absorbierende Element vorzugsweise als ein verformbares Element ausgestaltet, insbesondere als ein hülsenförmiges Anschlusselement, welches die Antriebsspindel mit einem dazu axial beabstandeten Antriebswellenstumpf verbindet.

Alternativ dazu oder auch in Kombination damit kann das Energie-absorbierende Element durch eine strukturelle und/oder konstruktive Gestaltung der Sitzlehne verwirklicht werden, insbesondere durch eine außerhalb der Sitzlehnenmitte gestaltete Anordnung mindestens einer Verstellvorrichtung, die vorzugsweise als Lehnenkopfantrieb ausgebildet ist. In diesem Zusammenhang kann der Lehnenkopfantrieb seitlich am Lehnenrahmen angeordnet sein. Vorzugsweise ist der Lehnenkopfantrieb dabei als Exzenterantrieb ausgebildet, welcher ein als Energie-absorbierendes Element gestaltetes Exzenterelement aufweist. Alternativ dazu kann der Lehnenkopfantrieb auch als Spindelantrieb ausgebildet sein.

Nachfolgend wird die Erfindung nun anhand der Zeichnungen und in Ausführungsbeispielen dazu näher erläutert. Es zeigen in schematischer Ansicht:
- Fig. 1: eine perspektivische Darstellung eines Lehnenmoduls mit einer Lehnenstützmatte, einem als Deformationselement ausgebildeten Energieabsorbierenden Element, einem Lehnenkopfversteller und einer Kopfstützenaufnahme.
- Fig. 2a, b: zeigen eine schematische Seitenansicht eines anderen Lehnenmoduls mit einer Lehnenstützmatte, einem Deformationselement und einem Lehnenkopfversteller bei verschiedenen Neigungen der Lehnenstützmatte.
- Fig. 2c: zeigt das Lehnenmodul nach Fig. 2a, b in einem Crash-Fall, hier nach einem Heck-Crash.
- Fig. 3 a, b, c: zeigen eine als Lehnenmodul ausgebildete Rückenlehne mit Kopfstützenverstellung bzw. Details davon.
- Fig. 4 a - d: zeigen in Seitenansicht die Rückenlehne nach Fig. 3 bzw. Details davon.
- Fig. 5: zeigt einen als Kopfstützenverstellung ausgebildeten Spindelantrieb, der auch als Energie-absorbierendes Element wirkt und reversibel gestaltet ist.
- Fig. 6 u. 7: zeigen dazu alternativ gestaltete Spindelantriebe.
- Fig. 8: zeigt einen Spindelantrieb, der als ein Energie-absorbierendes Element wirkt und irreversibel gestaltet ist.
- Fig. 9: zeigt einen Spindelantrieb mit einer irreversibel wirkenden Energieabsorbierenden Konstruktion.
- Fig. 10: zeigt in einem Lehnenkopfblech durch konstruktive Gestaltung realisierte Energie-absorbierende Elemente.
- Fig. 11: verdeutlicht die Wirkungsweise der Konstruktion nach Fig. 9 in einem Crash-Fall.
- Fig. 12: zeigt eine als starre Lehne mit Lehnenkopfverstellung ausgebildete Rückenlehne, die irreversibel Energie-absorbierend wirkt.
- Fig. 13 - 15: zeigen Rückenlehnen mit aktiv wirkenden Energie-absorbierenden Elementen.
- Fig. 16: zeigt eine Rückenlehne mit einem aktiven Hydrauliksystem zur Energieabsorbierung.
- Fig. 17 u. 18: zeigen Rückenlehnen mit Exzenter-Verstellung im Lenkkopfbereich.
- Fig. 19 a-d: zeigen verschiedene Ansichten einer Rückenlehne mit seitlich angeordneten Lenkkopfverstellvorrichtungen.

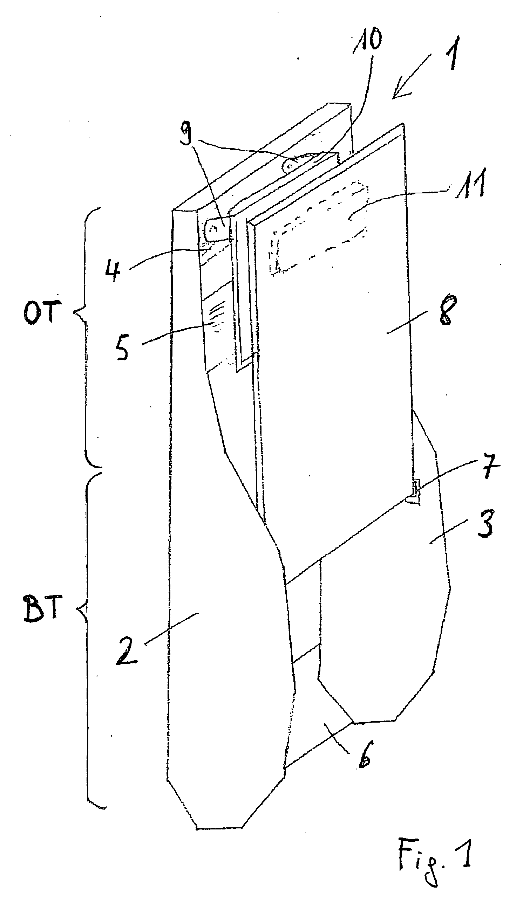

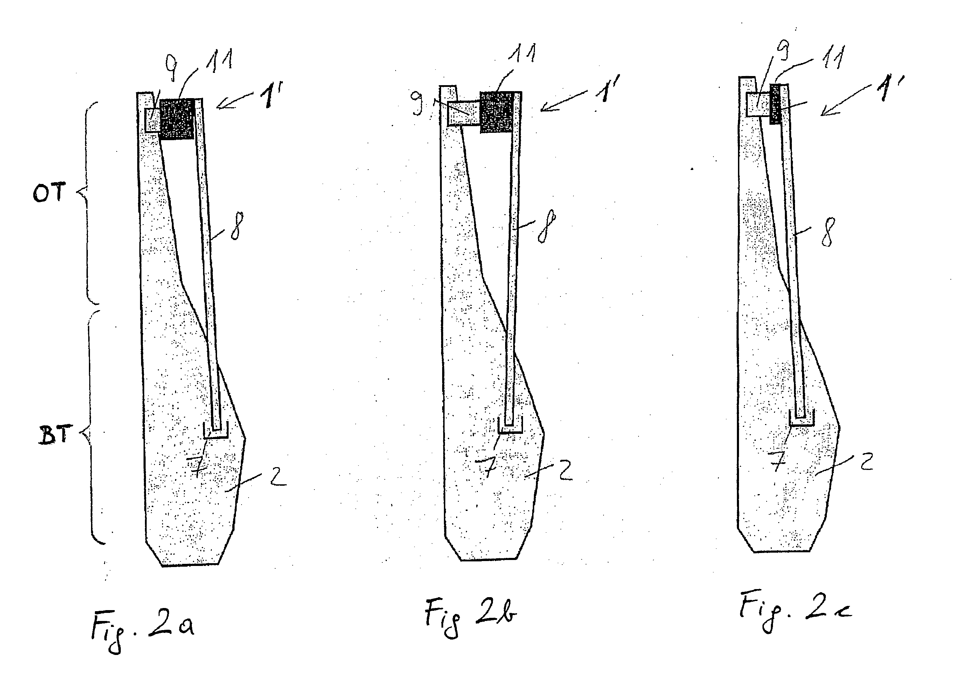

Die Fig. 1 zeigt eine Rückenlehne in Gestalt eines starren Lehnenmoduls 1, das seitliche Rahmenteile 2, 3 aufweist, welche über Stege 4, 5, 6 im Bereich der Lehnenbasis BT bzw. des Lehnenoberteils OT die beiden seitlichen Rahmenteile 2 und 3 miteinander verbinden und somit einen Lehnenrahmen bilden. Die in den Figuren 2a - c gezeigte Rückenlehne 1' ist von einer vergleichbaren Konstruktion. Die Rahmenteile 2 und 3 tragen auf ihrer Innenseite Aufnahmen 7 für Drehgelenke, in denen eine, bezogen auf die Fahrtrichtung des Kraftfahrzeugs, rückseitige Stützmatte 8 drehbar gelagert ist, so dass sich die Sitzkontur entsprechend den Wünschen des Insassen bzw. Sitzbenutzers einstellen lässt. Anstelle des Einsatzes von Drehgelenken kann auch eine starre Halterung der Stützmatte 8 in den Aufnahmen 7 vorgesehen werden, wenn durch die Elastizität der Stützmatte 8 (Lordosenstütze) bereits sichergestellt ist, dass die sich durch die Belastung durch den Insassen ausreichend durchbiegt. Es versteht sich, dass sich der Einsatz der Drehgelenke mit der Ausstattung der Stützmatte 8 mit Elastizität verbinden lässt.

Zwischen dem Steg 6 oder alternativ dem Lehnenquerrahmen im oberen Bereich des Lehnenmoduls 1 bzw. 1' und der Stützmatte 8 sind hintereinander Elemente als Verstellvorrichtung 9 zur Lehnenkopfverstellung, eine Aufnahme 10 für eine Kopfstütze und wenigstens ein Energie-absorbierendes Element 11 angeordnet. Das Energie-absorbierende Element ist in diesem Beispiel als ein Deformationselement 11 ausgestaltet.

Durch die Elemente bzw. die Verstellvorrichtung 9 lässt sich die Neigung der Stützplatte 8 gegenüber dem Lehnenmodul 1 bzw. 1' einstellen, so wie es in Fig. 2a, b gezeigt ist. Vorzugsweise ist das Deformationselement 11 zwischen der Aufnahme 10 für die Kopfstütze und der Stützmatte 8 angeordnet, wobei sich das Deformationselement im Fall eines Heck-Crashes verformt, so wie es in Fig. 2c dargestellt ist.

Das als Deformationselement 11 ausgebildete Energie-absorbierende Element besteht beispielsweise aus einem im wesentlichen plastisch verformbaren Kunststoff, der bei einem Crash, insbesondere Heck-Crash, komprimiert wird, wodurch die Lehnenoberkante und mit ihr der gesamte obere Bereich des Lehnenmoduls 1 bzw. 1' nach hinten gezogen wird. Die Kopfstützenaufnahme 10 ist vorzugsweise an dem Lehnenkopfversteller 9 befestigt. Sie kann jedoch auch unmittelbar an einem der Stege 5 oder 6 angebracht sein.

Durch den Einsatz wenigstens eines Energie-absorbierenden Elementes, hier in Form eines Deformationselements 11, weicht die Lehnenoberkante des Lehnenmoduls 1 bzw. 1' nach hinten aus, und verringert dadurch den Wert bzw. das Ausmaß der Beschleunigung des Nackenbereiches des Insassen, da die Beschleunigung des oberen Brustwirbelbereiches durch die Ausweichbewegung reduziert wird.

Die Fig. 1 und 2 zeigen demnach relativ einfach zu realisierende Ausführungsformen der Erfindung. Das als Energie-absorbierendes Element ausgestaltete Deformationselement 11 kann auch durch ein sich elastisch verformendes Element ersetzt werden, so dass sich die Gesamtkonstruktion reversibel gestaltet.

Es werden nachfolgend zunächst weitere Ausgestaltungen der Erfindung beschrieben, die ebenfalls reversible Konstruktionen darstellen:

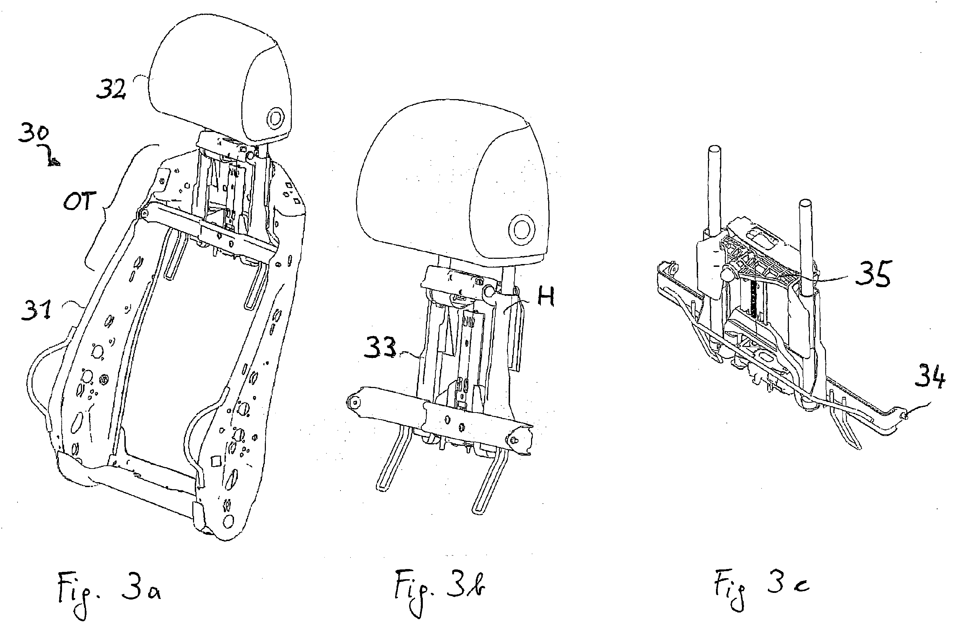

Die Fig. 3a, b, c zeigen eine als Lehnenmodul ausgebildete Rückenlehne mit Kopfstützenverstellung in einer Gesamtansicht sowie in Detailansichten.

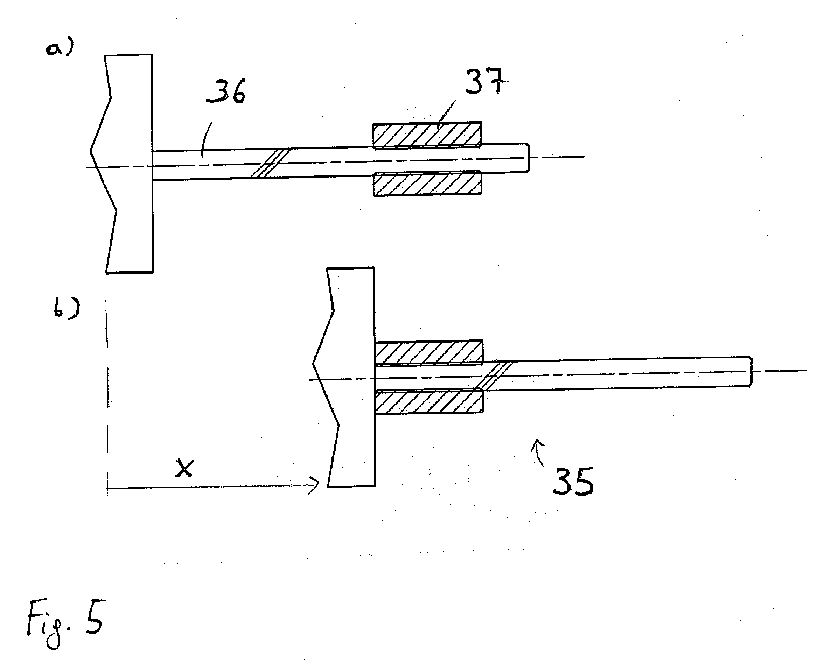

Das Lehnenmodul 30 weist einen Lehnenrahmen 31 auf, in dessen Lehnenoberteil OT Vorrichtungen zur Aufnahme und Verstellung einer Kopfstütze 32 vorgesehen sind (Fig. 3a). Die eigentliche Halterung H für die Kopfstütze ist mit einer Verstelleinrichtung 33 versehen, die es ermöglicht, die Kopfstütze insbesondere in Neigungsrichtung elektromotorisch zu verstellen. (Fig. 3b). Dazu ist in der Halterung ein Spindelantrieb 35 vorgesehen, der die Neigung der Kopfstütze in Bezug auf eine Schwenkachse 34 der Kopfstützenhalterung veränderbar einstellen kann. Erfindungsgemäß ist der Spindelantrieb 35 nun auch so ausgeführt, dass er als Energie-absorbierendes Element für einen Crash-Fall wirkt. Mögliche Ausführungsformen für einen solchen Spindelantrieb werden noch später anhand der Figuren 5 - 9 näher beschrieben.

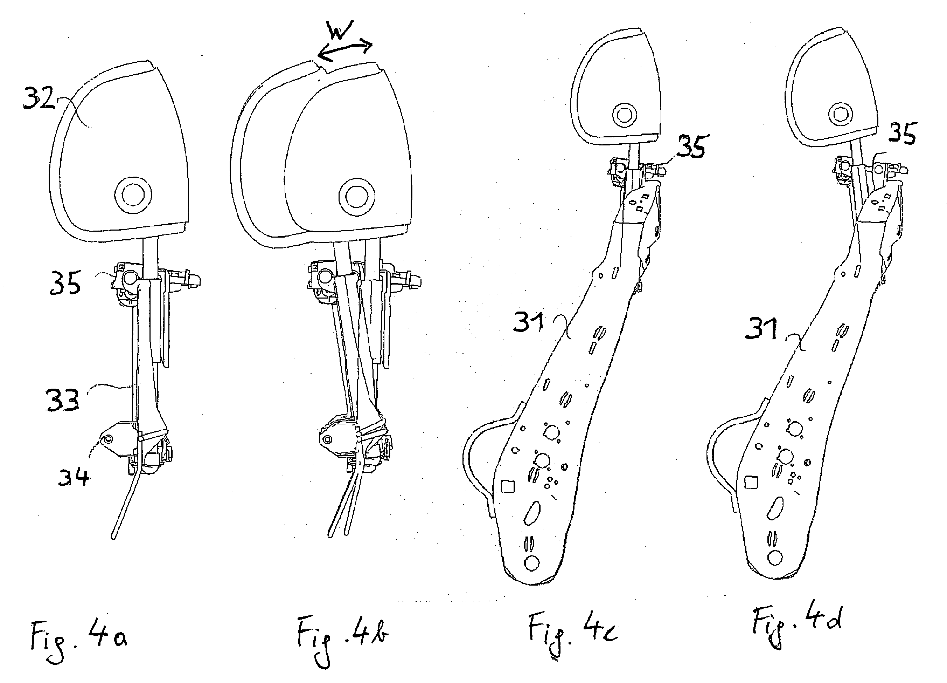

In den Fig. 4a, b, c, d ist die mit der Kopfstütze 32 ausgestattete Rückenlehne 31 in Seitenansichten sowohl im Detail als auch als Ganzes dargestellt. Wie die Figuren 4a und 4b im Vergleich zeigen, kann mittels des Spindelantriebs 35 die Neigung W der Kopfstütze 32 verstellt werden. Die dargestellte Kopfstützenverstellung 33 schwenkt dazu um die Achse 34 im Bereich des Verstellwinkels W.

Die Verstellung der Kopfstützenneigung wird auch anahnd der Fig. 4c und 4d verdeutlicht, wobei auch verdeutlicht wird, dass sich der Spindelantrieb 35 und somit auch das Energie-absorbierende Element im oberen Teil der Rückenlehne 31, nämlich integriert in der Kopfstützenverstellung bzw. Lehnenkopfverstellung 33, befindet.

Die Fig. 5 zeigt nun schematisch den Aufbau eines erfindungsgemäßen Spindelantriebes 35, der sowohl zur Verstellung des Lehnenkopfes bzw. der Kopfstütze dient, wie auch zur Absorption von der bei einem Crash auftretenden Energie. Der dargestellte Spindelantrieb 35 ist als nachgiebige und reversible Konstruktion ausgeführt, so dass nach einem Crash der Spindelantrieb 35 wieder in seinen Ursprungszustand bzw. Anfangszustand zurück versetzt werden kann und auch die Energie-absorbierende Wirkung erneut genutzt werden kann. Dazu ist auf der eigentlichen Antriebs-Spindel 36 eine Spindelmutter 37 angeordnet, wobei im Falle eines auftretenden Fahrzeugzusammenstosses (Crash-Fall) die Spindel 36 durch die Spindelmutter 37 rutscht (definiertes Ablaufen) und somit die auftretende Energie absorbiert werden kann.

Die Fig. 5a zeigt den Spindelantrieb in seinem Ursprungszustand und die Fig. 5b zeigt den Spindelantrieb nach einem erfolgten Crash. Wie durch Vergleich der Teilfiguren zu erkennen ist, wurde die Spindel 36 aufgrund des Crashs um eine bestimmte Wegstrecke X relativ zur Spindelmutter 37 bewegt. Die im Crash-Fall auftretende Energie wird insbesondere durch die entlang des Weges X auftretende Reibung zwischen Spindelmutter 37 und Spindel 36 und/oder durch Anschlag der Spindelmutter an einem Endanschlag der Spindel 36 absorbiert. Nach dem Crash kann die Spindel 36 wieder in ihre ursprüngliche Position zurückgeführt werden, sodass das Gesamtsystem als reversibles System anzusehen ist. Alternativ kann auch die Spindelmutter über die Spindel rutschen bzw. definiert ablaufen.

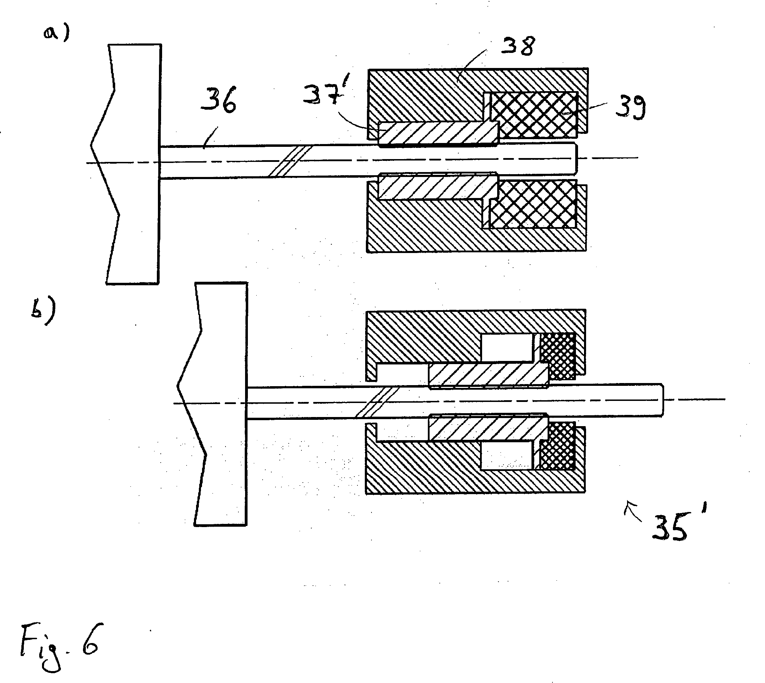

Die Fig. 6 zeigt eine dazu alternativ gestaltete Ausführungsform, bei der die Spindelmutter 37' in einer Spindelmutteraufnahme 38 eingefasst ist und zusätzlich ein als elastisches Deformationselement 39 ausgestaltetes Energie-absorbierendes Element vorgesehen ist. Die Spindelmutter 37 wird von der muffenförmigen Spindelmutteraufnahme 38 umschlossen, wobei die Spindelmutter 37 sich axial innerhalb der Spindelmutteraufnahme 38 bewegen kann. In axialer Richtung ist nun an mindestens einem Ende der Spindelmutteraufnahme 38 ein elastisches Deformationselement 39, z.B. in Form eines ringförmig gestalteten Elastomers, in die Spindelmutteraufnahme 38 eingefasst. Die Fig. 6a zeigt den Spindelantrieb 35' in seinem Ursprungszustand und die Fig. 6b zeigt den Zustand bei einem Crash, wobei das Deformationselement 39 elastisch verformt wird.

Wie ein Vergleich der Teilfiguren 6a und 6b verdeutlicht, wird nun die bei einem Crash auftretende Energie im wesentlichen durch eine relative axiale Verschiebung zwischen Spindelmutter 37' und Spindelaufnalune 38 absorbiert, indem aufgrund der relativen Verschiebung das Deformationselement 39 elastisch zusammengepresst wird, um die Energie aufzunehmen. Auch hier ist die Anordnung reversibel gestaltet. Wenn anstelle eines elastischen Deformationselementes 39 ein plastisch verformbares Element eingesetzt wird, so ergibt sich eine irreversible Konstruktion. Vorzuziehen ist aber die reversible Variante der erfindungsgemäßen Konstruktion.

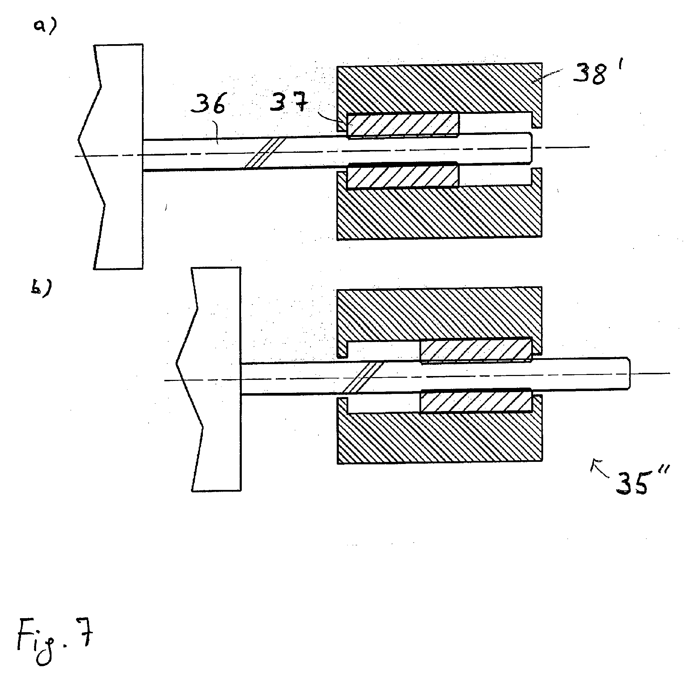

Die Fig. 7 zeigt eine weitere Ausgestaltung eines Spindelantriebs 35", bei dem die Spindelmutter 37 ebenfalls von einer Spindelmutteraufnahme 38' umschlossen wird. In diesem Fall jedoch bewegt sich die Spindelmutter 37 reibschlüssig innerhalb der Spindelmutteraufnahme 38', sodass die auftretende Crash-Energie durch die auftretende Reibung aufgrund der relativen Verschiebung der Spindelmutter 37 absorbiert wird. Auch diese Konstruktion ist somit reversibel gestaltet.

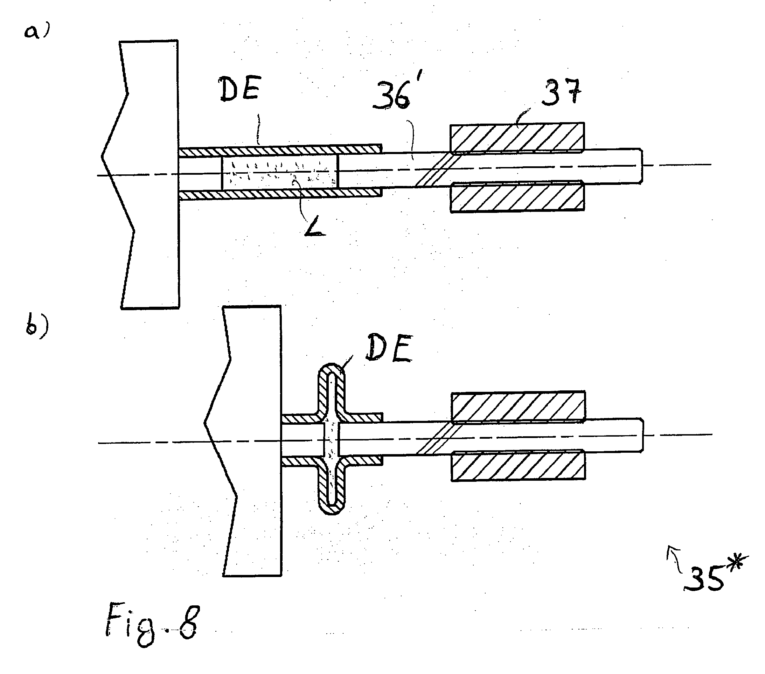

Die Fig. 8 zeigt eine irreversible Ausgestaltung eines Spindelantriebes 35*, bei dem als Energie-absorbierendes Element ein plastisches Deformationselement DE vorgesehen ist. Dabei handelt es sich z.B. um eine Wellenkupplung bzw. ein Anschlußelement in Gestalt einer deformierbaren Hülse. Diese ist zwischen der Spindel 36' und einem dazu beabstandeten Wellenstumpf bzw. Antriebsstumpf vorgesehen, um die Rotation zwischen Spindel 36' und Wellenstumpf zu übertragen. Im Crash-Fall wird dann die plastisch deformierbare Hülse DE zusammengestaucht, um somit die auftretende Energie zu absorbieren. Zusätzlich kann im Innern der Hülse DE, d.h. in dem Zwischenraum zwischen Spindel 36' und Wellenstumpf, noch ein Füllmittel L vorgesehen sein, das beispielsweise gasförmig, flüssig oder auch fest sein kann. Das Füllmittel L ist ebenfalls verformbar, vorzugsweise plastisch verformbar, um anteilig die auftretende Crash-Energie aufzunehmen und somit zu absorbieren.

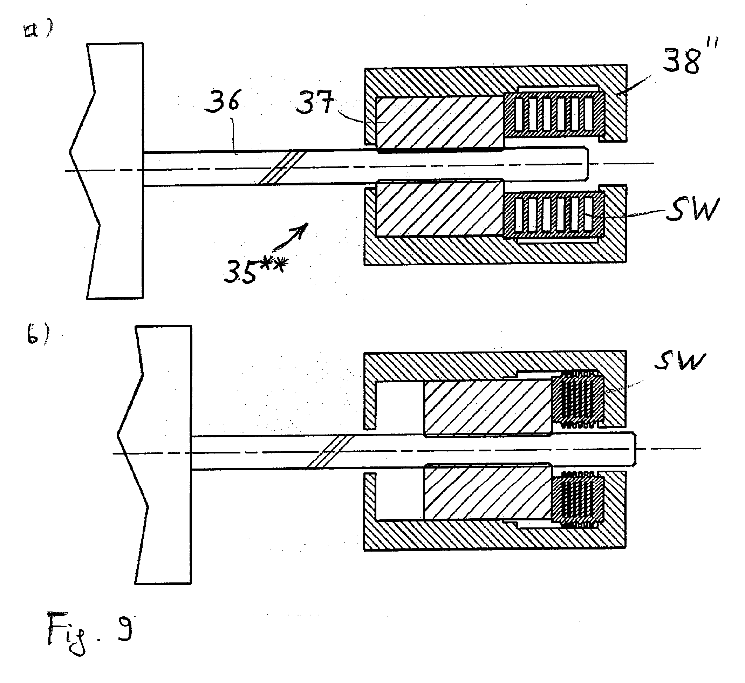

Die Fig. 9 zeigt eine alternative Konstruktion dazu, wobei bei dem dortigen Spindelantrieb 35** innerhalb der Spindelaufnahme 38" ein Energie-absorbierendes Element in Form eines plastisch verformbaren Sandwich-Verbundes SW vorgesehen ist. Der Sandwich-Verbund SW bildet somit auch ein Deformationselement, welches jedoch in diesem Falle aus mehreren Schichten, Materialien und/oder Komponenten zusammengesetzt ist. Beispielsweise kann dieses Deformationselement SW als hohlkammerförmiges Schaumstoffelement ausgebildet sein. Die Hohlkammern können beispielsweise mit Luft, einem Gas oder einem anderen kompressionsfähigen Material befüllt sein. Damit ergibt sich eine hohe Energieabsorptionsfähigkeit der gezeigten Gesamtanordnung.

Bei den oben beschriebenen Ausgestaltungen der Erfindung wurde die in einem Crash-Fall auftretende Energie im wesentlichen durch mindestens ein Energie-absorbierendes Element aufgefangen, welches in einer Verstelleinrichtung, insbesondere einem Spindelantrieb, integriert wurde. Im folgenden werden nun Lösungen beschrieben, die vorzugsweise durch eine konstruktive bzw. strukturelle Gestaltung der Rückenlehne, insbesondere des Lehnenoberteils realisiert werden.

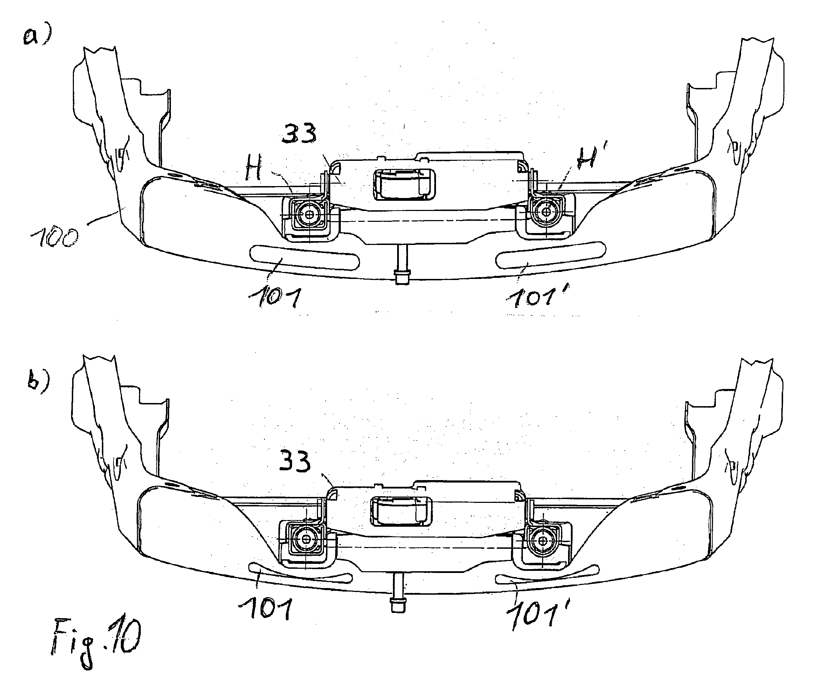

Die Fig. 10a, b zeigen dazu ein erfindungsgemäß ausgestaltetes Lehnenkopfblech 100, das an geeigneten Stellen vorbestimmte Aussparungen 101 und 101' aufweist, die im Falle eines Fahrzeugzusammenstosses eine definierte plastische Verformung des Lehnenkopfbleches 100 an diesen Deformationsstellen 101 bzw. 101' bewirken. Vorzugsweise befinden sich die Deformationsstellen bzw. Aussparungen 101 und 101' im Bereich der Halterungen H bzw. H' für die Kopfstütze. Die Teilfiguren 10a und 10b zeigen jeweils in Draufsicht das Lehnenoberteil bzw. Lehnenlcopfblech 100 einmal im Zustand vor dem Crash und einmal im Zustand nach dem Crash. Wie im Vergleich der beiden Teilfiguren deutlich zu sehen ist, wird die Crash-Energie durch definierte Deformation an den vorgesehenen Deformationsstellen bzw. Aussparungen 101 und 101' vollständig absorbiert. Das Vorsehen von zusätzlichen, Energie-absorbierenden Elementen, beispielsweise innerhalb der Kopfstützenverstellung 33, ist somit nicht zwingend erforderlich.

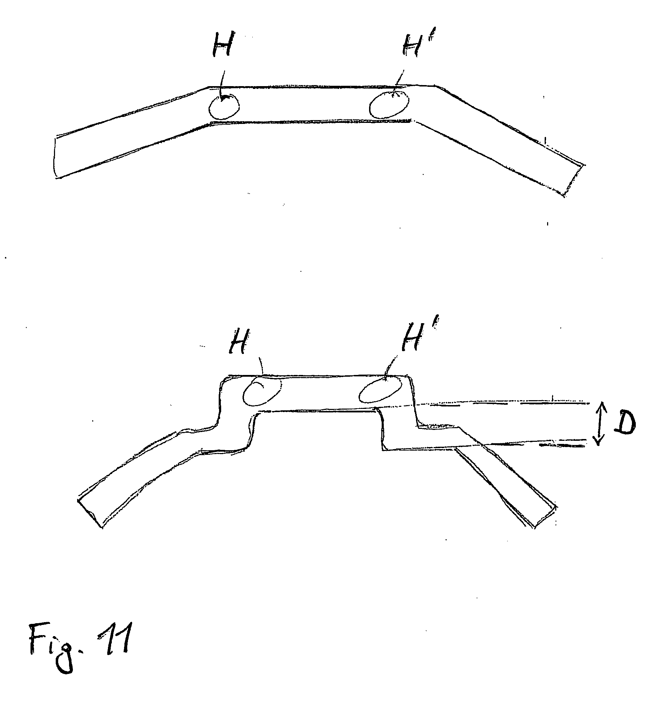

Die Absorptionsfunktion der konstruktiven Gestaltung des Lehnenkopfbleches wird anhand der Fig. 11 verdeutlicht. Anstelle von Aussparungen kann auch das Lehnenkopfblech selbst eine definierte Formgebung aufweisen, die eine definierte Crash-Zone D als Energie-absorbierendes Element bereitstellt. Auch in diesem Fall die Konstruktion als irreversibles System ausgelegt.

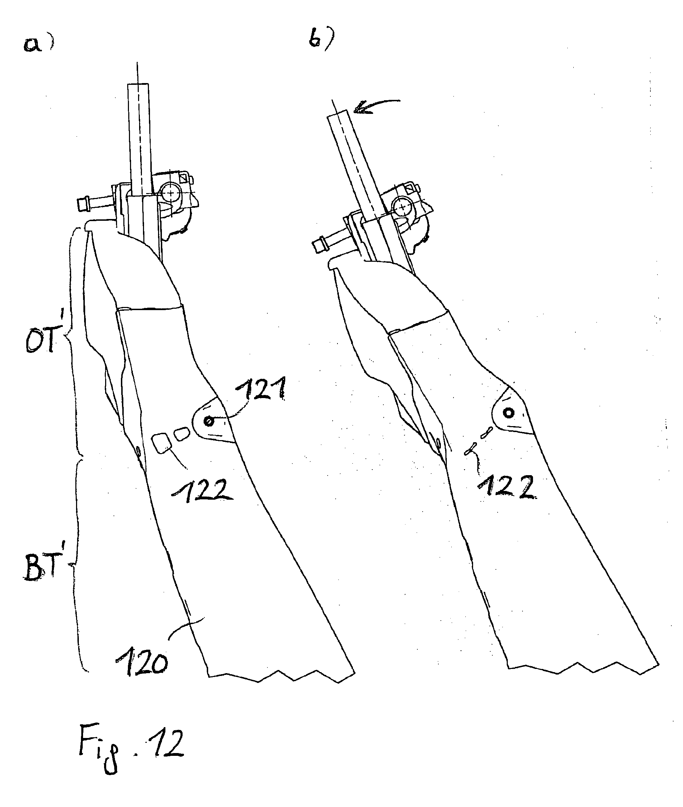

Die Fig. 12 zeigt nun das Ausführungsbeispiel einer Rückenlehne 120, die als starre Lehne mit Lehnenkopfverstellung ausgeführt ist. Dazu ist die Rückenlehne bzw. das Lehnenmodul zweiteilig gestaltet, wobei das Lehnenoberteil OT' gegenüber dem Basisteil BT' schwenkbar um eine Achse 121 angeordnet ist. Zur Absorption der bei einem Crash auftretenden Energie sind in dem Lehnenrahmen Aussparungen 122 im Bereich der Schwenkachse 121 vorgesehen, die eine definierte Verstauchung des Materials an dieser Stelle im Crash-Fall ermöglichen. Auch diese Konstruktion ist als irreversibles System anzusehen.

Im weiteren werden nun Lösungen beschrieben, die aktive Energie-absorbierende Elemente aufweisen:

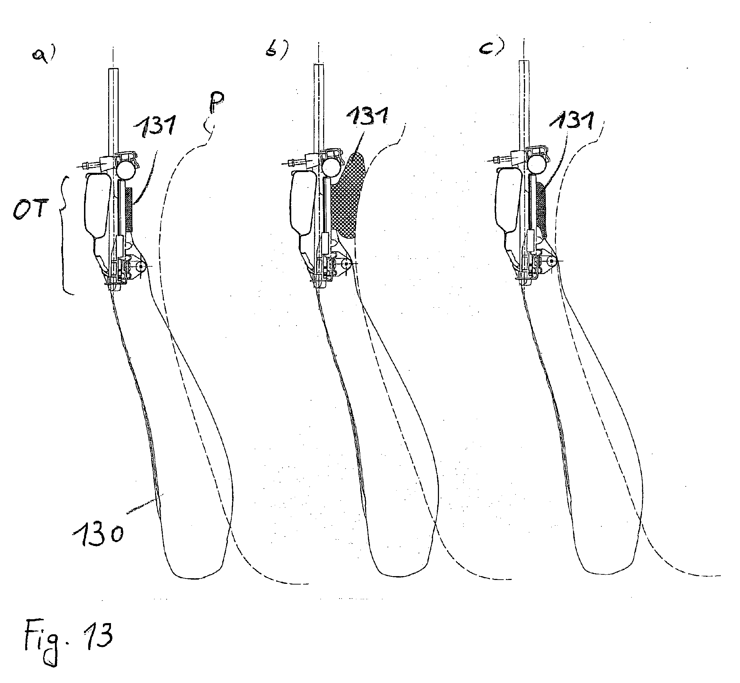

In der Fig. 13 ist eine Sitzlehne 130 dargestellt, die im Lehnenkopfbereich OT ein als Mini-Airbag ausgestaltetes Energie-absorbierendes Element 131 aufweist. Im Falle eines Fahrzeugzusammenstosses wird der Oberkörper der Person P, insbesondere im Brustwirbelbereich, durch den dann aufgeblasenen Mini-Airbag 131 abgefangen. In der Realisierung wird das System als irreversibles System ausgeführt, weil der Airbag nach seiner Verwendung nicht ohne weiteres in seinen Ursprungszustand versetzt werden kann, sondern ggf. in einer Werkstatt durch einen neuen Airbag ersetzt werden muss.

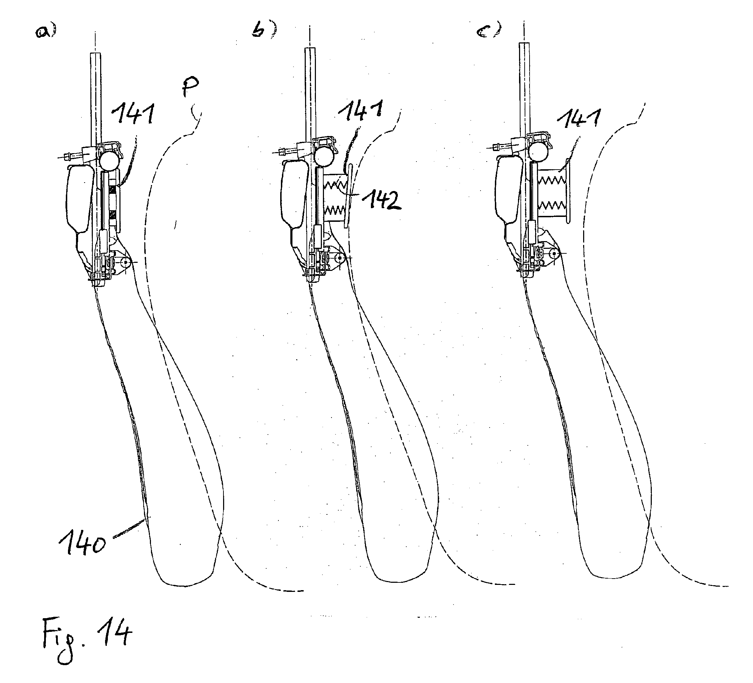

Die Fig. 14 zeigt ein dazu alternativ ausgestaltetes System, bei dem in der Rückenlehne 140 am oberen Ende ein federelastisches Element 141 zur Absorption der auftretenden Crash-Energie vorgesehen ist. Hierbei kann es sich beispielsweise um eine mit Federn 142 hervorspringende Brustwirbelstütze handeln, welche die auftretende Crash-Energie absorbiert. Die Stütze kann manuell in ihren Ursprungszustand zurückversetzt werden, sodass dieses System als reversibel anzusehen ist.

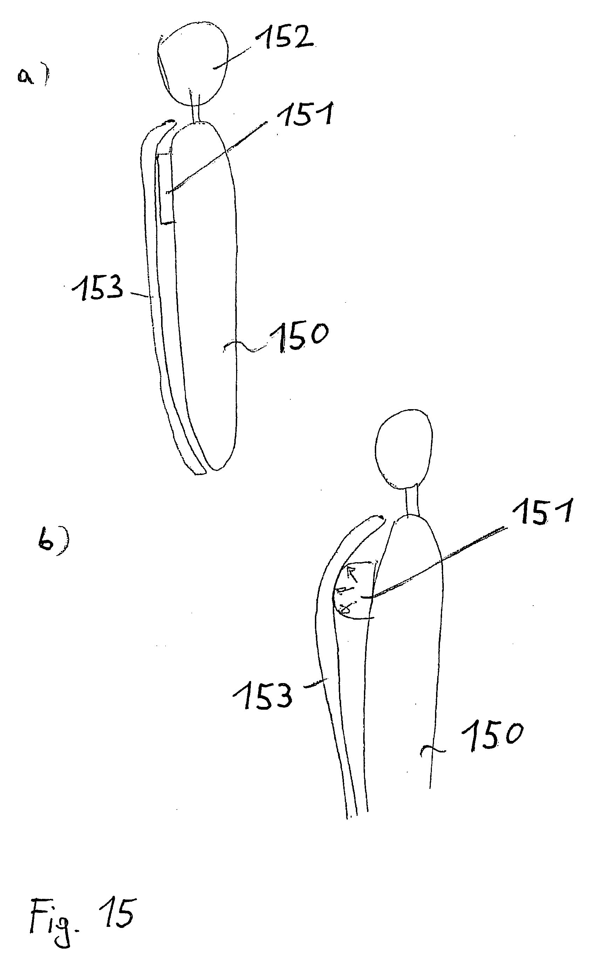

Die Fig. 15 zeigt eine Integration des Systems nach Fig. 13 oder Fig. 14 in die Polsterung einer Rückenlehne 150. Das Energie-absorbierende Element 151 wird dazu unterhalb der Polsterung 153 in den oberen Teil der Sitzlehne 150 und unterhalb der Kopfstütze 152 integriert. Im Crash-Fall kann das Element 151 (z.B. Airbag oder Federstütze) ausfahren, und den Oberkörper des Fahrzeuginsassen abfangen.

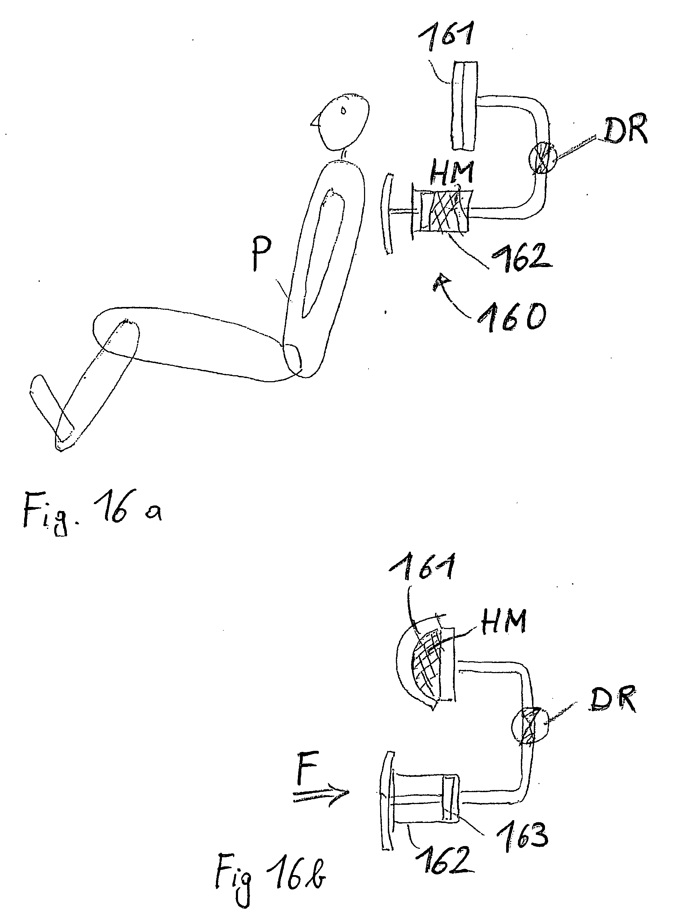

Anhand der Fig. 16a und b wird eine Rückenlehne 160 mit einem weiteren, aktiv wirkenden Energie-absorbierenden Element bzw. System beschrieben. Dazu ist in die Rückenlehne 160 ein hydraulisches System bestehend aus einem hydraulisch expandierbaren Element 161 dargestellt, welches über einem Hydraulikkreislauf bestehend aus einem Hydraulikreservoir 162 mit Kolben und einer Drossel versorgt wird. Der Kolben wird durch den im Crash-Fall zurüclcschleudernden Oberkörper des Insassen P eingefahren und presst das Hydraulikmittel HM über die Drossel DR in das im oberen Bereich der Lehne angeordnete Element 161. Das dann dort eingepresste Hydraulikmittel expandiert bei beispielsweise im Innern eines Ballons, der im Brustwirbelbereich des Insassen P abstützend und Energie-absorbierend wirkt.

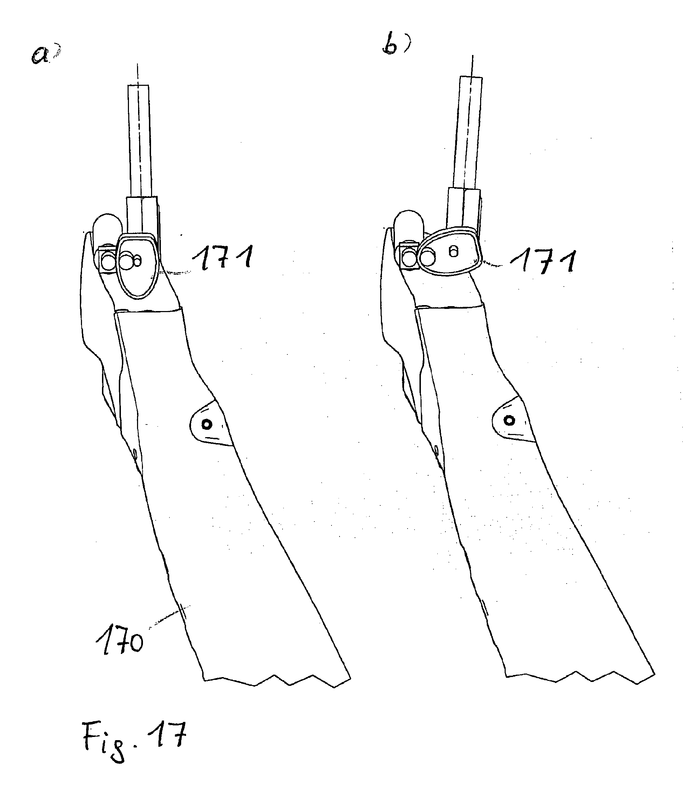

Die nachfolgenden Fig. 17 - 19 zeigen Ausgestaltungen von Rückenlehnen, bei denen innerhalb der Lehnenkopfverstellung Energie-absorbierende Element realisiert sind:

Die Fig. 17 zeigt eine Rückenlehne 170, die mit einem Mechanismus zur Lehnenkopfverstellung 171 ausgestattet ist. Die Lehnenkopfverstellung erfolgt dabei über ein exzenterförmiges Element, das im Falle eines Crashs die auftretende Energie aufnimmt.

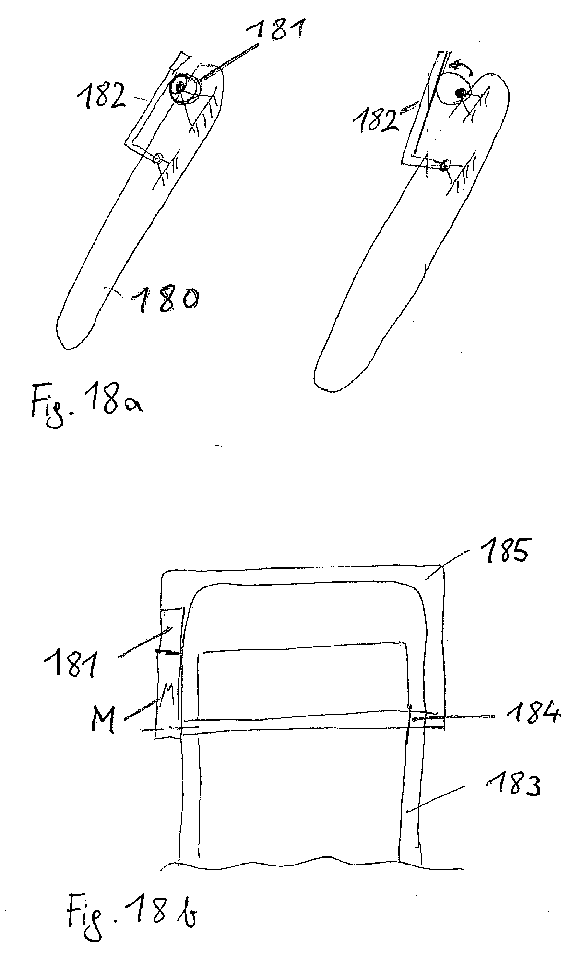

Anhand der Fig. 18a und b wird die Integration eines solchen Elementes 181 innerhalb der Rückenlehne 180 veranschaulicht, wobei das exzenterförmige Element 181 sich unterhalb eines Stützelementes 182 befindet, das den Brustwirbelbereich des Insassen abstützt. Vorzugsweise ist das als Energie-absorbierende Element ausgeführte Exzenterelement 181 in eine mit Motor M betriebene Verstellvorrichtung integriert, die sich im seitlichen Bereich des Lehnenkopfbleches 185 befindet und eine Verstellung der Neigung bezogen auf eine Schwenkachse 184 bewirkt. Die Schwenkachse bzw. Lagerstelle 184 für das Lehnenkopfblech 185 ist wiederum mit der starren Lehne 183 verbunden.

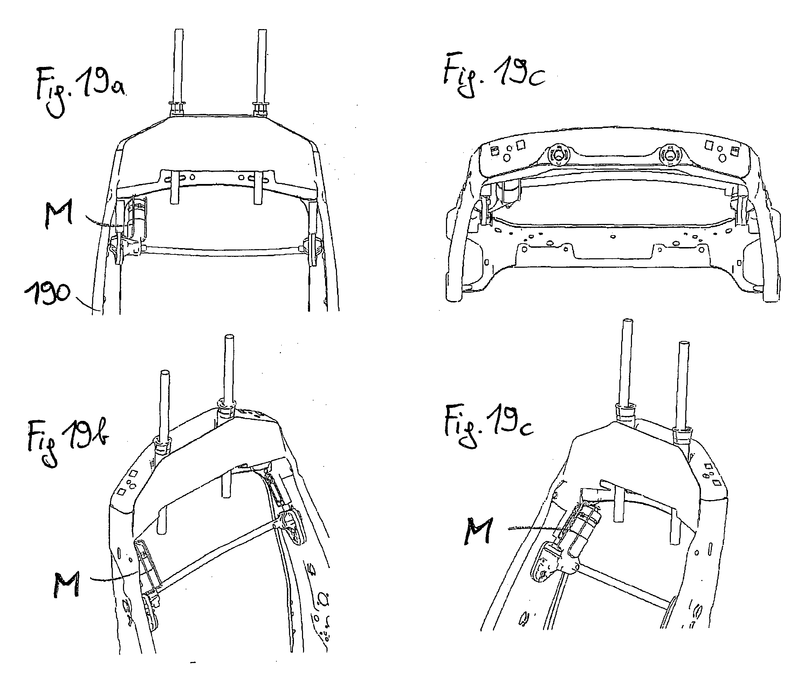

Die Fig. 19a- 19d zeigen eine solche mittels Motor M betriebene Verstellvorrichtung bzw. deren Montage-Ort innerhalb des Oberteils einer Rückenlehne 190. Diese ist hier z.B. als Knicklehne ausgebildet und weist ein Lehnenoberteil aufweist, welches schwenkbar zum Basisteil ausgeführt ist. Als Energie-absorbierendes Element ist hier eine integrierte Lösung im Antrieb der Verstelleinrichtung für das Lehnenoberteil vorgesehen. Diese Verstelleinrichtung kann beispielsweise wie die schon zuvor beschriebenen Spindelantriebe (siehe Fig. 5 - 9) realisiert sein.

**Bezugszeichenliste**

| | |
|---|---|
| 1, 30, 110, 130, 140, 150, 160, 170, 180, 190 | Rückenlehne (in versch. Ausgestaltungen) |
| | |
| 1 | Rückenlehne als starres Lehnenmodul ausgestaltet |
| 2, 3 | Lehnenrahmen (seitliche Rahmenteile) |
| 4, 5, 6 | Stege im Bereich der Lehnenbasis |
| 7 | Aufnahme(n) für Drehgelenk(e) |
| 8 | Stützmatte (Lordosenstütze) |
| 9 | Verstellvorrichtung |
| 10 | Aufnahme für Kopfstütze (Halterung) |
| 11 | Energie-absorbierendes Element, als Deformationselement ausgestaltet |
| | |
| 30 | Rückenlehne als Lehnenmodul mit Kopfstützen-Verstellung ausgestaltet |
| BT, BT' | Lehnenbasisteil |
| OT, OT' | Lehnenoberteil |
| 31 | Lehnenrahmen |
| 32; 152 | Kopfstütze |
| 33 | Kopfstützen-Verstellung (bzw. Lehnenkopf-Verstellung) |
| 34 | Schwenkachse für Kopfstützen-Halterung |
| H, H' | Halterung in der Kopfstützen-Aufnahme |
| W | Neigungswinkel der Kopfstütze |
| | |
| 35, 35', 35", 35"' | Spindelantrieb als Energie-absorbierendes Element realisiert (versch. Ausgestaltungen) |
| 36, 36' | Antriebs-Spindel (in versch. Ausgestaltungen) |
| 37, 37', 37" | Spindelmutter (in versch. Ausgestaltungen) |
| X | Zurückgelegter Weg (nach einem Crash) |
| 38, 38' | Spindelmutter-Aufnahme (in versch. Ausgestaltungen) |
| 39 | Energie-absorbierendes Element, als elastisches Deformationselement ausgestaltet (Elastomer) |
| DE; SW | Energie-absorbierendes Element, als plastisches Deformationselement ausgestaltet (Wellen-Kupplung bzw. Schaumstoff-Element) |
| | |
| 90 | Lehnenkopfblech |
| 91 | Aussparungen (vorbestimmte Deformationsstellen) |
| D | Deformationsweg |
| | |
| 110 | Rückenlehne als zweiteiliges Lehnenmodul (in Gestalt einer Knicklehne) ausgestaltet |
| 111 | Schwenkachse der Knicklehne |
| 112 | Energie-absorbierendes Element, als Deformationsbereich ausgestaltet |
| | |
| 130, 140, 150, 160 | Rückenlehne mit aktiven Energie-absorbierendem Element (in versch. Ausgestaltungen) |
| 131; 151 | Energie-absorbierendes Element, als Mini-Airbag ausgestaltet |
| P | Person bzw. Insasse |
| 141 | Energie-absorbierendes Element, als Feder-Vorrichtung ausgestaltet |
| | |
| 150 | Rückenlehne mit Mini-Airbag im Lehnenkopfbereich |
| 153 | Sitzpolster |
| | |
| 160 | Rückenlehne mit Energie-absorbierendem Element, als Hydraulik-Vorrichtung ausgestaltet |
| 161 | Elastischer Hydraulik-Ballon |
| 162 | Hydraulik-Reservoir mit Kolben |
| DR | Drossel |
| HM | Hydraulikmittel |
| F | wirkende Trägheits-Kraft (beim Crash) |
| | |
| 170, 180, 190 | Rückenlehne mit Exenter-Verstellung im Lehenkopfbereich (in versch. Ausgestaltungen) |
| 171, 181 | Energie-absorbierenden Exenter-Element Exenter-Element (im Verstellantrieb) |
| 182 | Stützelement |
| 185 | Lehnenkopf-Verstellung (LKV-Blech) |
| M | Antriebsmotor |
| 183 | Starre Lehne |
| 184 | Lagerstelle für LKV-Blech |

## Patentansprüche

1. Kraftfahrzeugsitz mit einer Rückenlehne (1), die auf ihrer Vorderseite eine Abstützfläche zum Abstützen des Rückens eines auf dem Kraftfahrzeugsitz sitzenden Insassen aufweist, und mit einer Kopfstütze, die auf ihrer Vorderseite eine Abstützfläche zum Abstützen des Kopfes des Insassen aufweist, wobei die Rückenlehne (1) einen Lehnenrahmen (2, 3), ein Lehnenbasisteil (BT) und ein Lehnenoberteil (OT) umfasst, wobei
das Lehnenoberteil (OT) für den Fall eines Fahrzeugzusammenstoßes mindestens ein Energie-absorbierendes Element (DE,SW,39) umfasst, das aus einer Relativbewegung zwischen Kopfwirbelbereich und Brustwirbelbereich des Insassen resultierende Beschleunigungsunterschiede kompensiert
**dadurch gekennzeichnet dass** das Energie-absorbierende Element (DE,SW,39) in eine motor- und spindelgetriebene Verstellvorrichtung (35; 35*, 35**) integriert ist, die zur Verstellung der Rückenlehne und/oder der Kopfstütze (32) vorgesehen ist.

2. Kraftfahrzeugsitz nach Anspruch 1, **dadurch gekennzeichnet, dass** das Lehnenoberteil (OT) eine, bezogen auf ihre unterseitige Lagerung, drehbewegliche Stützmatte (8) aufweist und dass das mindestens eine Energie-absorbierende Element wenigstens ein Deformationselement (DE,SW,39) ist, das im oberen Bereich der Stützmatte (8) auf der dem Insassen zugewandten Seite angeordnet ist.

3. Kraftfahrzeugsitz nach Anspruch 2, **dadurch gekennzeichnet, dass** das Lehnenoberteil (OT) zum Lehnenbasisteil (BT) verkippbar ist, wobei die Rückenlehne (1) im Fall eines Fahrzeugzusammenstoßes bzw. Crash-Falls weg vom Rücken des Insassen verkippbar ist, dass die Verstellvorrichtung (9) zur Verstellung des oberen Bereichs der Stützmatte (8) gegenüber dem Lehnenrahmen (2,3) vorgesehen ist und dass das mindestens eine Energie-absorbierende Element (DE,SW,39) in Reihe mit der Verstellvorrichtung, insbesondere einem Lehnenkopfversteller (33), angeordnet ist.

4. Kraftfahrzeugsitz nach einem der vorhergehenden Ansprüche, **dadurch gekennzeichnet, dass** die wenigstens eine Verstellvorrichtung (35;35*;35**) gegenüber einem dem Insassen zugewandten waagerechten Steg (5,6) des Lehnenrahmens (2, 3) abgestützt wird.

5. Kraftfahrzeugsitz nach einem der vorhergehenden Ansprüche, **dadurch gekennzeichnet, dass** das mindestens eine Energie-absorbietende Element (DE,SW,39) in Reihe mit einer Kopfstützenaufnahme (10) angeordnet ist.

6. Kraftfahrzeugsitz nach einem der Ansprüche 2 bis 3 **dadurch gekennzeichnet, dass** das mindestens eine Energie-absorbierende Element (DE,SW,39) zwischen der Kopfstützenaufnahme (10) und der Stützmatte (8) angeordnet ist.

7. Kraftfahrzeugsitz nach einem der Ansprüche 2 bis 3, bzw.6, **dadurch gekennzeichnet, dass** die Stützmatte (8) infolge einer drehbaren Lagerung in dem Lehnenbasisteil (BT) und/oder aufgrund ihrer Deformierbarkeit gegenüber dem Lehnenbasisteil (BT) verdrehbar ist.

8. Kraftfahrzeugsitz nach einem der vorhergehenden Ansprüche, **dadurch gekennzeichnet, dass** die Rückenlehne als ein Lehnenmodul (1) ausgestaltet ist, insbesondere als ein zweiteiliges Lehnenmodul (110; 200) ausgestaltet ist, das einen unteren Abschnitt (BT') und einen oberen dazu verschwenkbaren Abschnitt (OT') aufweist.

9. Kraftfahrzeugsitz nach Anspruch 1, **dadurch gekennzeichnet, dass** das Energieabsorbierende Element (DE,SW,39) nachgiebig und in einen Anfangszustand zurückführbar bzw. reversibel ausgeführt ist.

10. Kraftfahrzeugsitz nach Anspruch 1, **dadurch gekennzeichnet, dass** das Energie-absorbierende Element als eine auf einer Antriebsspindel (36) laufende Spindelmutter (37) ausgestaltet ist, die im Crash-Fall durchrutscht.

11. Kraftfahrzeugsitz nach Anspruch 1 oder 10, **dadurch gekennzeichnet, dass** das Energie-absorbierende Element als ein elastisch verformbares Element (39) ausgestaltet ist, das in axialer Richtung zwischen einer Spindelmutter (37') und einer, insbesondere muffenförmigen, Spindelmutter-Aufnahme (38) angeordnet ist.

12. Kraftfahrzeugsitz nach Anspruch 1 oder 10, **dadurch gekennzeichnet, dass** das Energie-absorbierende Element als eine muffenförmige Spindelmutter-Aufnahme (38') ausgestaltet ist, die die Spindelmutter (37) reibschlüssig umfasst.

13. Kraftfahrzeugsitz nach Anspruch 9, **dadurch gekennzeichnet, dass** in der Rückenlehne (140) am oberen Ende ein federelastisches Element (141) zur Absorption der auftretenden Crash-Energie vorgesehen ist, insbesondere eine mit Federn (142) hervorspringende Brustwirbelstütze vorgesehen ist.

14. Kraftfahrzeugsitz nach Anspruch 9 oder 13, **dadurch gekennzeichnet, dass** das Energie-absorbierende Element (151) in eine Polsterung (153) der Rückenlehne (150) integriert oder unterhalb der Polsterung (153) angeordnet ist.

15. Kraftfahrzeugsitz nach Anspruch 9, **dadurch gekennzeichnet, dass** das Energie-absorbierende Element als ein hydraulisch expandierbares Element (161) verwirklicht ist, das über einen Hydraulikkreislauf (162, DR) im Crash-Fall mit einem Hydrauklikmittel (HM) versorgt wird.

16. Kraftfahrzeugsitz nach Anspruch 15, **dadurch gekennzeichnet, dass** der Hydraulikkreislauf ein Hydraulikreservoir (162) mit einem Kolben umfasst, der im Crash-Fall durch den zurtickschleudernden Oberkörper des Insassen (P) eingefahren wird und presst das Hydraulikmittel (HM) in das hydraulisch expandierbares Element (161), das insbesondere mit einem Ballon ausgestattet ist, presst.

17. Kraftfahrzeugsitz nach Anspruch 1, **dadurch gekennzeichnet, dass** das das Energie-absorbierende Element (SW; DE; 91; 112) nachgiebig und nicht in einen Anfangszustand zurückführbar bzw. irreversibel ausgeführt ist.

18. Kraftfahrzeugsitz nach Anspruch 17, **dadurch gekennzeichnet, dass** das Energieabsorbierende Element als ein verformbares Element, insbesondere ein hülsenförmiges Deformationselement bzw. Anschlußelement (DE), ausgestaltet ist, das eine Antriebspindel (36') mit einem dazu axial beabstandeten Antriebswellenstumpf verbindet.

19. Kraftfahrzeugsitz nach Anspruch 17, **dadurch gekennzeichnet, dass** eine Sitzlehne (130) in ihrem Lehnenkopfbereich (OT) ein als Mini-Airbag ausgestaltetes Energie-absorbierendes Element (131) aufweist.

20. Kraftfahrzeugsitz nach Anspruch 1, 9 oder 13, **dadurch gekennzeichnet, dass** das Energie-absorbierende Element durch eine strukturelle und/oder konstruktive Gestaltung der Sitzlehne (130) verwirklicht ist.

21. Kraftfahrzeugsitz nach Anspruch 20, **dadurch gekennzeichnet, dass** die Rückenlehne ein Lehnenkopfiblech (100) aufweist, das an mindestens einer Stelle eine zur Deformation vorbestimmte Aussparung (101,101') aufweist, die im Falle eines Fahrzeugzusammenstosses eine definierte plastische Verformung des Lehnenkopfbleches (100) an dieser mindestens einen Stelle bewirkt.

22. Kraftfahrzeugsitz nach Anspruch 21,**dadurch gekennzeichnet, dass** die als Deformationsstellen vorbestimmten Aussparungen (101, 101') im Bereich von Halterungen (H, H') für die Kopfstütze vorgesehen sind.

23. Kraftfahrzeugsitz nach Anspruch 20, **dadurch gekennzeichnet, dass** die Rückenlehne (1) als Knicklehne ausgeführt ist, wobei in dem Lehnenrahmen Aussparungen (122) im Bereich einer Schwenkachse (121) vorgesehen, die eine definierte Verstauchung des Materials an dieser Stelle im Crash-Fall ermöglichen.

24. Kraftfahrzeugsitz nach einem der vorhergehenden Ansprüche, **dadurch gekennzeichnet, dass** das Energie-absorbierende Element durch eine außerhalb der Sitzlehnenmitte gestaltete Anordnung mindestens einer Verstellvorrichtung (181, M), insbesondere eines Lehnenkopfantriebes, verwirklicht ist.

25. Kraftfahrzeugsitz nach Anspruch 24, **dadurch gekennzeichnet, dass** der Lehnenkopfantrieb seitlich an einem Lehnenrahmen (183) angeordnet ist.

26. Kraftfahrzeugsitz nach Aspruch 24 oder 25, **dadurch gekennzeichnet, dass** der Lehnenkopfantrieb als Exenterantrieb ausgebildet ist, der ein als Energie-absorbierendes Element gestaltetes Exenter-Element (171; 181) aufweist.

27. Kraftfahrzeugsitz nach Anspruch 24 oder 25, **dadurch gekennzeichnet, dass** der Lehnenkopfantrieb als Spindelantrieb ausgebildet ist.

## Claims

1. A motor vehicle seat with a backrest (1) which has on its front side a support surface for supporting the back of a person being an occupant sitting on the vehicle seat, and a headrest, which has on its front side a support surface for supporting the head of the occupant, wherein the backrest (1) has a backrest frame (2, 3), a backrest base part (BT) and a backrest top part (OT), wherein
the backrest top part (OT) comprises at least one energy-absorbing element (DE, SW, 39) for being used in the event of a vehicle collision, the element compensating acceleration differences resulting from a relative movement between the cervical spine and thoracic vertebrae region of the occupant,
**characterized in that** the energy-absorbing element (DE, SW, 39) is integrated in an motor-and spindle-driven adjusting device (35, 35*, 35**) is integrated, which is provided for adjustment of the backrest and/or the headrest (32).

2. The motor vehicle seat according to claim 1, **characterized in that** the backrest top part (OT) comprises, in relation to its underside bearing, a rotatable support mat (8), and that the at least one energy-absorbing element consists of at least one energy-absorbing element (DE, SW, 39) which is arranged in the upper region of the support mat (8) at the side facing the occupant.

3. The motor vehicle seat according to claim 2, **characterized in that** the backrest top part (OT) is tiltable to the backrest base part (BT), wherein the backrest (1), in the event of a vehicle collision or crash, is tiltable away from the back of the occupant; and the adjusting device (35, 35*, 35**) is provided for adjustment of the upper region of the support mat (8) in relation to with the backrest frame (2, 3); and that the at least one energy-absorbing element (DE, SW, 39) is arranged in series with the adjusting device, in particular with a backrest head adjuster (33).

4. The motor vehicle seat according to any one of the preceding claims, **characterized in that** the at least one adjusting device (35; 35*; 35**) is supported in relation to a horizontal bar (5, 6) of the backrest frame (2, 3) facing a horizontal the occupant.

5. The motor vehicle seat according to one of the preceding claims, **characterized in that** the at least one energy absorbing element (DE, SW, 39) is arranged in series with a head rest holder (10).

6. The vehicle seat according to any one of claims 2 to 3, **characterized in that** the at least one energy absorbing element (DE, SW, 39) is arranged between the head rest holder (10) and the support mat (8).

7. The motor vehicle seat according to one of claims 2 to 3, **characterized in that** the supporting mat (8) is rotatable due to a rotary mounting in the backrest base part (BT) and/or due to their deformability in relation to the backrest base part (BT).

8. The motor vehicle seat according to one of the preceding claims, **characterized in that** the backrest is configured as a backrest module (1), in particular as a two-part backrest module (110, 200), comprising a bottom portion (BT') and an upper portion (OT') being pivotable thereto.

9. The motor vehicle seat according to claim 1, **characterized in that** the energy-absorbing element (DE, SW, 39, 35) is made resilient and returnable or reversible to an initial state.

10. The motor vehicle seat according to claim 1, **characterized in that** the energy-absorbing element is configured as a spindle nut (37) running on a drive spindle (36) and slipping in the event of a crash.

11. The motor vehicle seat according to claim 1 or 10, **characterized in that** the energy-absorbing element is configured as an elastically deformable element (39) being arranged in the axial direction between a spindle nut (37') and an spindle nut holder (38), in particular a sleeve-shaped one.

12. The motor vehicle seat according to claim 1 or 10, **characterized in that** the energy-absorbing element is designed as a sleeve-shaped spindle nut holder (38') being frictionally engaged with the spindle nut (37).

13. The motor vehicle seat according to claim 9, **characterized in that** in the backrest (140) at the upper end a resilient element (141) is provided to absorb the occurring crash energy, in particular that a thoracic vertebra support is provided that protudes with springs (142).

14. The motor vehicle seat according to claim 9 or 13, **characterized in that** the energy-absorbing element (151) is integrated into a padding (153) of the backrest (150) or is arranged below said padding (153).

15. The motor vehicle seat according to claim 9, **characterized in that** the energy-absorbing element is realized as a hydraulically expandable element (161) which is supplied in the event of a crash with a hydraulic medium (HM) over a hydraulic circuit (162, DR).

16. The motor vehicle seat according to claim 15, **characterized in that** the hydraulic circuit includes a hydraulic reservoir (162) with a piston which is moved back or retracted in the event of a crash by the pushed-back torso of the occupant (P) and which compresses the hydraulic medium (HM) into the hydraulically expandable element (161), which in particular is equipped with a balloon.

17. The motor vehicle seat according to claim 1, **characterized in that** the energy-absorbing element (SW, EN, 91, 112) is configured to be resilient and not to be returnable to an initial state or to be irreversible.

18. The motor vehicle seat according to claim 17, **characterized in that** the energy-absorbing element is configured to be a deformable element, in particular a sleeve-shaped deformation element or connection element (DE), which connects a drive spindle (36') with a drive stub shaft being axially spaced thereto.

19. The motor vehicle seat according to claim 17, **characterized in that** a seat back (130) in its backrest top part (OT) comprises an energy-absorbing element (131) being configured as a mini airbag.

20. The motor vehicle seat according to claim 1, 9 or 13, **characterized in that** the energy-absorbing element is realized by a structural and/or constructive design of the seat back (130).

21. The motor vehicle seat according to claim 20, **characterized in that** the backrest comprises a backrest head plate (100) having at least one location a recess (101, 101') being predetermined for deformation which causes, in the event of a vehicle collision, a defined plastic deformation of the upper backrest plate (100) to this at least one location.

22. The motor vehicle seat according to claim 21, **characterized in that** the recesses (101, 101') being predetermined for deformation are provides in the region of supports (H, H') for the headrest.

23. The motor vehicle seat according to claim 20, **characterized in that** the backrest (1) is configured to be an articulated backrest, wherein in the back frame there are provided recesses (122) in the region of a pivot axis (121) which allows a defined sprain of the material at this point in the event of a crash.

24. The motor vehicle seat according to one of the preceding claims, **characterized in that** the energy-absorbing element is realized by the arrangement of at least one adjusting device (181, M) outside of the seat back mid, in particular being realized by a backrest top drive.

25. The motor vehicle seat according to claim 24, **characterized in that** the backrest head drive is disposed laterally on a backrest frame (183).

26. The motor vehicle seat according to claim 24 or 25, **characterized in that** the backrest drive is constructed as an eccentric drive comprising an energy-absorbing element being designed as an eccentric element (171, 181).

27. The motor vehicle seat according to claim 24 or 25, **characterized in that** the backrest drive is configured to be a spindle drive.

## Revendications

1. Un siège de véhicule automobile comportant un dossier (1) présentant sur sa face avant une surface de support pour le maintien du dos d'une personne assise occupant une place assise sur le siège de véhicule, et un appui-tête présentant sur sa face avant une surface de support pour le maintien de la tête de l'occupant, dans lequel le dossier (1) présente un cadre de dossier (2, 3), une partie inférieure de dossier (BT) et une partie supérieure de dossier (OT), dans lequel
la partie supérieure de dossier (OT) comporte au moins un élément d'absorption d'énergie (DE, SW, 39) destiné à servir dans le cas d'une collision du véhicule, l'élément compensant les différences d'accélération résultant d'un mouvement relatif entre la colonne vertébrale cervicale et la région des vertèbres thoraciques de l'occupant ;
**caractérisé en ce que** l'élément d'absorption d'énergie (DE, SW, 39) est intégré dans le dispositif de réglage de la broche à moteur (35, 35*, 35**), qui est disponible pour le réglage du dossier et/ou de l'appui tête.

2. Le siège de véhicule automobile de la revendication 1, **caractérisé en ce que** la partie supérieure de dossier (OT) comporte, en relation avec son support sous-jacent, un tapis de soutien rotatif (8), et **en ce que** le ou les élément(s) d'absorption d'énergie consiste en au moins un élément d'absorption d'énergie (DE, SW, 39) qui est disposé sur la région supérieure du tapis de soutien rotatif (8) du côté faisant face à l'occupant.

3. Le siège de véhicule automobile de la revendication 2, **caractérisé en ce que** la partie supérieure de dossier (OT) peut être est inclinée vers la partie inférieure de dossier (BT), dans lequel le dossier (1), dans le cas d'une collision automobile ou d'un crash, est incliné loin du dos de l'occupant ; et le dispositif de réglage (35, 35*, 35**) est fourni pour le réglage de la région supérieure du tapis de soutien (8) relative au cadre du dossier (2, 3), et **en ce que** l'élément d'absorption d'énergie au moins (DE, SW, 39) est disposé en série avec le dispositif de réglage, en particulier avec un réglage d'appui tête (33).

4. Le siège de véhicule automobile selon l'une quelconque des revendications précédentes, **caractérisé en ce que** le ou les dispositif(s) de réglage (35, 35*, 35**) est soutenu par rapport à une barre horizontale (5, 6) du cadre de dossier (2, 3) faisant face à l'occupant.

5. Le siège de véhicule automobile selon l'une quelconque des revendications précédentes, **caractérisé en ce que** le ou les élément(s) d'absorption d'énergie (DE, SW, 39) sont disposés en série avec un support de l'appui-tête (10).

6. Le siège de véhicule automobile selon l'une quelconque des revendications 2 à 3, **caractérisé en ce que** le ou les élément(s) d'absorption d'énergie (DE, SW, 39) est/sont disposé(s) entre le support de l'appui-téte (10) et le tapis de soutien (8).

7. Le siège de véhicule automobile selon l'une quelconque des revendications 2 à 3, **caractérisé en ce que** le tapis de soutien (8) est rotatif grâce à un assemblage rotatif au sein de la partie inférieure de dossier (BT) et/ou grâce à leur aptitude à la déformation relativement à la partie inférieure de dossier (BT).

8. Le siège de véhicule automobile selon l'une quelconque des revendications précédentes, **caractérisé en ce que** le dossier de siège est configuré sous la forme d'un module de dossier (1), en particulier un module de dossier en deux parties (110, 200), comprenant une partie inférieure (BT') et une partie supérieure (OT') pivotables.

9. Le siège de véhicule automobile selon la revendication 1, **caractérisé en ce que** l'élément d'absorption d'énergie (DE, SW, 39, 35) est élastique et pouvant revenir à un état initial.

10. Le siège de véhicule automobile selon la revendication 1, **caractérisé en ce que** l'élément d'absorption d'énergie est configuré sous la forme d'un écrou de broche (37) courant sur une tige d'entraînement (36) et pouvant glisser en cas de collision.

11. Le siège de véhicule automobile selon la revendication 1 ou 10, **caractérisé en ce que** l'élément d'absorption d'énergie est configuré sous forme d'un élément élastique déformable (39) qui est disposé suivant une direction axiale entre un écrou de broche (37') et un support d'écrou de broche (38), en particulier en forme de douille.

12. Le siège de véhicule automobile selon la revendication 1 ou 10, **caractérisé en ce que** l'élément d'absorption d'énergie est configuré sous forme de support d'écrou de broche en forme de douille (38') en prise par friction avec l'écrou de broche (37).

13. Le siège de véhicule automobile selon la revendication 9, **caractérisé en ce qu'**un élément élastique (141) est disposé à une extrémité supérieure du dossier de siège (140) pour l'absorption d'une énergie de collision, en particulier un soutien des vertèbres thoraciques en surplomb sur des ressorts (142) .

14. Le siège de véhicule automobile selon la revendication 9 ou 13, **caractérisé en ce que** l'élément d'absorption d'énergie (151) est intégré dans un coussin (153) du dossier (150) ou est disposé sous ledit coussin (153).

15. Le siège de véhicule automobile selon la revendication 9, **caractérisé en ce que** l'élément d'absorption d'énergie est réalisé sous forme d'un élément hydraulique expansible (161) qui est fourni dans le cas d'une collision avec un matériau hydraulic (HM) via un circuit hydraulique (162, DR).

16. Le siège de véhicule automobile selon la revendication 15, **caractérisé en ce que** le circuit hydraulique comporte un réservoir hydraulique (162) avec un piston qui est déplacé vers l'arrière ou rétracté dans le cas d'une collision, par le choc de retour du torse de l'occupant (P) et qui comprime le matériau hydraulique (HM) au sein de l'élément hydraulique expansible (161), lequel est en particulier équipé d'un ballon.

17. Le siège de véhicule automobile selon la revendication 1, **caractérisé en ce que** l'élément d'absorption d'énergie (SW, EN, 91, 112) est configuré pour être élastique sans pouvoir revenir à un état initial ou encore irréversible.

18. Le siège de véhicule automobile selon la revendication 17, **caractérisé en ce que** l'élément d'absorption d'énergie est configuré pour être un élément déformable, en particulier un élément déformable en forme de douille ou un élément de fixation (DE), fixant une broche d'entraînement (36') avec un arbre en bout d'entraînement espacé axialement de celui-ci.

19. Le siège de véhicule automobile selon la revendication 17, **caractérisé en ce qu'**un dossier de siège (130) comporte dans sa partie supérieure de dossier (OT) un élément configuré comme un mini sac gonflable absorbant l'énergie (131).

20. Le siège de véhicule automobile selon la revendication 1, 9 ou 13, **caractérisé en ce que** l'élément d'absorption d'énergie est réalisé sous forme d'un élément de structure du siège de dossier (130).

21. Le siège de véhicule automobile selon la revendication 20, **caractérisé en ce que** le dossier de siège comporte une plaque de tête de dossier (100) ayant une cavité (101, 101') à au moins un emplacement pour une déformation entraînant, dans le cas d'une collision automobile, une déformation plastique définie de la plaque de dossier supérieure (100) à ce ou ces emplacement(s).

22. Le siège de véhicule automobile selon la revendication 21, **caractérisé en ce que** les cavités (101, 101') prédéterminées pour une déformation sont fournis dans la région des supports (H, H') pour l'appui-tête.

23. Le siège de véhicule automobile selon la revendication 20, **caractérisé en ce que** le dossier (1) est configuré pour être un dossier articulé, dans lequel des cavités (122) sont disposées dans le cadre dans la région d'un axe de pivotement (121) permettant une déformation définie du matériau lors d'une collision.

24. Le siège de véhicule automobile selon l'une quelconque des revendications précédentes, **caractérisé en ce que** l'élément d'absorption d'énergie est réalisé au moyen d'un arrangement d'au moins un élément de réglage (181, M) à l'extérieur du dossier, en particulier réalisé par un entraînement supérieur du dossier,

25. Le siège de véhicule automobile selon la revendication 24, **caractérisé en ce que** l'entraînement de la tête du dossier est disposé latéralement sur un cadre de dossier. (183).

26. Le siège de véhicule automobile selon la revendication 24 ou 25, **caractérisé en ce que** l'entraînement de dossier est réalisé sous la forme d'un entraînement excentrique comprenant un élément d'absorption d'énergie conçu sous forme d'un élément excentrique (171, 181).

27. Le siège de véhicule automobile selon la revendication 24 ou 25, **caractérisé en ce que** l'entraînement du dossier est réalisé sous forme d'un entraînement à broche.
